# EUROPEAN PATENT SPECIFICATION

(11) **EP 4 393 595 B1**
(45) Date of publication and mention of the grant of the patent: **18.11.2026**
(21) Application number: 23216163.8
(22) Date of filing: 13.12.2023
(51) Int. Cl.: B01L 3/00, B29C 65/06

(54) **AMPLIFICATION PLATE ASSEMBLY AND STATE DETECTION METHOD OF AMPLIFICATION PLATE ASSEMBLY**
VERSTÄRKUNGSPLATTENANORDNUNG UND ZUSTANDSERFASSUNGSVERFAHREN FÜR EINE VERSTÄRKUNGSPLATTENANORDNUNG
ENSEMBLE DE PLAQUE D'AMPLIFICATION ET PROCÉDÉ DE DÉTECTION D'ÉTAT D'ENSEMBLE DE PLAQUE D'AMPLIFICATION

(30) Priority: 31.12.2022 CN 202211738115
(43) Date of publication of application: 03.07.2024
(73) Proprietor: Shenzhen New Industries Biomedical Engineering Co., Ltd., Shenzhen, Guangdong 518122 (CN)
(72) Inventor: WANG, Yixian, Shenzhen, 518122 (CN); HE, Jiebiao, Shenzhen, 518122 (CN); ZHENG, Xiaolin, Shenzhen, 518122 (CN); HE, Guoyao, Shenzhen, 518122 (CN); ZHU, Liang, Shenzhen, 518122 (CN); HU, Ying, Shenzhen, 518122 (CN)
(74) Representative: Studio Torta S.p.A.

(56) References cited:
- EP-A1- 2 338 597
- JP-A- 2003 149 249
- US-B1- 6 426 215

## Description

### Technical Field

The present invention relates to the field of nucleic acid testing consumable materials, and specifically, to an amplification plate assembly and a state detection method of the amplification plate assembly.

### Background

An amplification plate assembly is configured to amplify nucleic acid extracted from samples for subsequent detection. Before a nucleic acid amplification step is executed, the nucleic acid extracted from the samples needs to be transferred onto the amplification plate assembly, and the amplification plate assembly is sealed by using a sealing film.

In order to conveniently perform a film sealing operation on nucleic acid detection samples, a nucleic acid amplification plate is designed in the related art. However, the nucleic acid amplification plate in the related art needs to be used in combination with a sealing film reel. Specifically, the sealing film reel is mounted on a sealing film reel fixation structure; when an amplification plate body needs to be sealed, the sealing film is pulled from the sealing film reel, then the sealing film is sealed on the amplification plate body in a hot-pressing manner by using a film sealing machine, and finally, the redundant sealing film is cut by a cutting mechanism, so as to complete sealing of the nucleic acid amplification plate.

A sealing method of the nucleic acid amplification plate in the related art is relatively cumbersome, and requires the additional sealing film reel fixation structure and cutting mechanism, which occupy space.

Examples of a Multiwell plate and lid according to the prior art are known from EP2338597A1. Examples of a Multiwall Plate Cover and Assembly Suitable for Mechanical Control according to the prior art are known from JP2003149249A. Examples of a PCR Plate Cover and Maintaining Device according to the prior art are known from US6426215B1.

### Summary

The present invention is mainly intended to provide an amplification plate assembly and a state detection method of the amplification plate assembly, so as to solve the problem of a complex sealing method of a nucleic acid amplification plate in the related art.

The invention is set out in the appended set of claims.

In order to implement the above objective, the present invention provides an amplification plate assembly, which includes: an amplification plate body, provided with a plurality of accommodating grooves; a frame structure, covering on the amplification plate body and including a mounting opening, wherein groove openings of the plurality of accommodating grooves are opposite to the mounting opening; a sealing film, disposed on the frame structure and sealing the mounting opening; and an insertion structure, disposed between the frame structure and the amplification plate body, wherein the insertion structure includes an insertion portion and a cooperating portion cooperating with the insertion portion; one of the insertion portion and the cooperating portion is disposed on the frame structure, and the other one is disposed on the amplification plate body; the cooperating portion includes a first cooperating portion and a second cooperating portion; when the insertion portion is cooperated with the first cooperating portion in an inserting manner, there is a predetermined distance between the sealing film and the amplification plate body; and when the insertion portion is cooperated with the second cooperating portion in an inserting manner, the sealing film is attached to an upper surface of the amplification plate body.

In some embodiments, the first cooperating portion and the second cooperating portion are arranged at intervals on one side of the amplification plate body or the frame structure, such that the frame structure translates to allow the insertion portion to switch between the first cooperating portion and the second cooperating portion.

In some embodiments, the insertion portion includes an insertion protrusion; the insertion protrusion is provided on the frame structure; the first cooperating portion includes a first inserting groove; the second cooperating portion includes a second inserting groove; the first inserting groove and the second inserting groove are both disposed on the amplification plate body; and a groove bottom wall of the second inserting groove is lower than a groove bottom wall of the first inserting groove.

In some embodiments, the first inserting groove and the second inserting groove are arranged at intervals on one side of the amplification plate body, such that the frame structure translates to allow the insertion protrusion to switch between the first inserting groove and the second inserting groove.

In some embodiments, there are a plurality of insertion protrusions; a part of the plurality of insertion protrusions are arranged at intervals at a first end of the frame structure; the other part of the plurality of insertion protrusions are arranged at intervals at a second end of the frame structure; there are a plurality of first inserting grooves, and the plurality of first inserting grooves are in one-to-one correspondence with the plurality of insertion protrusions; and there are a plurality of second inserting grooves, and the plurality of second inserting grooves are in one-to-one correspondence with the plurality of insertion protrusions.

In some embodiments, the first inserting groove is provided on a sidewall of the amplification plate body and penetrates a top wall of the amplification plate body; and the second inserting groove is provided on the sidewall of the amplification plate body and penetrates the top wall of the amplification plate body.

In some embodiments, the frame structure includes a top frame and a side frame disposed in a circumferential direction of the top frame; and the side frame is located on a circumferential outer side of a sidewall of the amplification plate body. The amplification plate assembly further includes a first inserting hole provided on the sidewall of the amplification plate body and a second inserting hole provided on the side frame. When the insertion protrusion is cooperated with the first inserting groove in the inserting manner, the first inserting hole is disposed opposite to the second inserting hole; and when the insertion portion is cooperated with the second inserting groove in the inserting manner, the first inserting hole is disposed opposite to the second inserting hole.

In some embodiments, when the insertion portion is cooperated with the first inserting groove in the inserting manner, a projection of the first inserting hole on the side frame is completely located in the second inserting hole; and when the insertion portion is cooperated with the second inserting groove in the inserting manner, at least part of the projection of the first inserting hole on the side frame is located in the second inserting hole.

In some embodiments, the amplification plate body includes a first end and a second end, which are arranged opposite to each other in a length direction of the amplification plate body. There are a plurality of first inserting holes, a sidewall of the first end of the amplification plate body is provided with a part of the plurality of first inserting holes, and a sidewall of the second end of the amplification plate body is provided with the other part of the plurality of first inserting holes. There are a plurality of first inserting grooves, the sidewall of the first end of the amplification plate body is provided with a part of the plurality of first inserting grooves, and the sidewall of the second end of the amplification plate body is provided with the other part of the plurality of first inserting grooves. There are a plurality of second inserting grooves, the sidewall of the first end of the amplification plate body is provided with a part of the plurality of second inserting grooves, and the sidewall of the second end of the amplification plate body is provided with the other part of the plurality of second inserting grooves.

In some embodiments, the amplification plate body further includes a plurality of connecting rings; the plurality of connecting rings are arranged in one-to-one correspondence with the plurality of accommodating grooves; each connecting ring is disposed at the groove opening of the accommodating groove and is disposed concentric with the groove opening of the accommodating groove; and upper surfaces of the connecting rings form the upper surface of the amplification plate body.

In some embodiments, the plurality of accommodating grooves are arranged in an array; a first identifier is disposed at a first accommodating groove of each row, and a second identifier is disposed at a first accommodating groove of each column.

The present invention further provides a method for detecting a state of an amplification plate assembly. The amplification plate assembly is the above amplification plate assembly. The amplification plate body of the amplification plate assembly includes a first long edge, when the insertion portion is cooperated with the second cooperating portion in the inserting manner, a distance of the frame structure protruding from the first long edge is L1, when the insertion portion is cooperated with the first cooperating portion in the inserting manner, a distance of the frame structure protruding from the first long edge is L4. The method for detecting the state of the amplification plate assembly includes: moving the amplification plate body, so as to cause the amplification plate body to close to a signal transmission line of a signal transmitter and a signal receiver, and cause the first long edge of the amplification plate body to have a first predetermined distance H1 from the signal transmission line of the signal transmitter and the signal receiver, wherein H1 < L1 and H1 < L4; and estimating whether the signal receiver receives a signal transmitted by the signal transmitter, if the signal receiver is capable of receiving the signal transmitted by the signal transmitter, estimating that the frame structure does not cover the amplification plate body, and if the signal receiver does not receive the signal transmitted by the signal transmitter, estimating that the frame structure covers the amplification plate body.

The present invention further provides a method for detecting a state of an amplification plate assembly. The amplification plate assembly is the above amplification plate assembly. The amplification plate body of the amplification plate assembly includes a first long edge and a second long edge, when the insertion portion is cooperated with the second cooperating portion in the inserting manner, a distance of the frame structure protruding from the first long edge is L1, and a distance of the frame structure protruding from the second long edge is L2. The method for detecting the state of the amplification plate assembly includes: moving the amplification plate body, so as to cause the first long edge of the amplification plate body to close to a signal transmission line of a signal transmitter and a signal receiver, and cause the first long edge of the amplification plate body to have a second predetermined distance H2 from the signal transmission line of the signal transmitter and the signal receiver, wherein L2 < H2 < L1; and estimating whether the signal receiver receives a signal transmitted by the signal transmitter, if the signal receiver is capable of receiving the signal transmitted by the signal transmitter, estimating that the frame structure does not cover the amplification plate body, and if the signal receiver does not receive the signal transmitted by the signal transmitter, estimating that the insertion portion is cooperated with the second cooperating portion in the inserting manner.

The present invention further provides a method for detecting a state of an amplification plate assembly. The amplification plate assembly is the above amplification plate assembly. The amplification plate body of the amplification plate assembly includes a first long edge and a second long edge, when the insertion portion is cooperated with the first cooperating portion in the inserting manner, a distance of the frame structure protruding from the first long edge is L4, and a distance of the frame structure protruding from the second long edge is L3. The method for detecting the state of the amplification plate assembly includes: moving the amplification plate body, so as to cause the second long edge of the amplification plate body to close to a signal transmission line of a signal transmitter and a signal receiver, and cause the second long edge of the amplification plate body to have a third predetermined distance H3 from the signal transmission line of the signal transmitter and the signal receiver, wherein L4 < H3 < L3; and estimating whether the signal receiver receives a signal transmitted by the signal transmitter, if the signal receiver is capable of receiving the signal transmitted by the signal transmitter, estimating that the frame structure does not cover the amplification plate body, and if the signal receiver does not receive the signal transmitted by the signal transmitter, estimating that the insertion portion is cooperated with the first cooperating portion in the inserting manner.

Through the technical solutions of the present invention, the amplification plate assembly includes the amplification plate body and the frame structure; the frame structure is provided with the mounting opening; and the mounting opening is sealed with the sealing film, and the sealing film is disposed opposite to the plurality of accommodating grooves. The sealing film can be adhered on the amplification plate body through hot-pressing of a hot-pressing film machine and seals the plurality of accommodating grooves, such that detection samples in the accommodating grooves are prevented from overflowing. In addition, the frame structure is further provided with the insertion portion, and the amplification plate body is provided with the first cooperating portion and the second cooperating portion, which are respectively cooperated with the insertion portion. When the amplification plate assembly is transported, the insertion portion may be cooperated with the first cooperating portion in the inserting manner, and in this case, there is a predetermined distance between the sealing film and the amplification plate body, such that the sealing film and the amplification plate body are prevented from scratching due to shaking during transportation, thereby effectively reducing the probability of sealing film damage. When the accommodating grooves need to be sealed, the insertion portion may be cooperated with the second cooperating portion in the inserting manner, and in this case, the sealing film is attached to the upper surface of the amplification plate body, such that the sealing film may be heated by the hot-pressing film machine, so as to adhere the sealing film on the amplification plate body, thereby achieving sealing of the accommodating grooves. In the above structure, by cooperating the insertion portion with different cooperating portions, the probability of sealing film damage can be effectively reduced when the amplification plate assembly is transported. In addition, the sealing method between the sealing film and the amplification plate body is convenient and efficient, and sealing may be achieved by the hot-pressing film machine, without additionally disposing other auxiliary devices.

### Brief Description of the Drawings

The drawings, which form a part of this application, are used to provide a further understanding of the present invention. The exemplary embodiments of the present invention and the description thereof are used to explain the present invention, but do not constitute improper limitations to the present invention. In the drawings:
Fig. 1 is a schematic diagram of a three-dimensional structure of an amplification plate assembly according to the present invention.
Fig. 2 is a side view of the amplification plate assembly of Fig. 1.
Fig. 3 is a schematic diagram of a three-dimensional structure of an amplification plate body of the amplification plate assembly of Fig. 1.
Fig. 4 shows a simplified structural diagram of a lateral direction of the amplification plate assembly of Fig. 1 when an insertion portion is cooperated with a second cooperating portion.
Fig. 5 shows a simplified structural diagram of a lateral direction of the amplification plate assembly of Fig. 1 when the insertion portion is cooperated with a first cooperating portion.

The above accompanying drawings include the following reference numerals:
10. Amplification plate body; 11. Accommodating groove; 12. First end; 13. Second end; 14. Connecting ring; 15. First identifier; 16. Second identifier; 20. Frame structure; 21. Top frame; 211. Mounting opening; 22. Side frame; 30. Insertion structure; 31. Insertion portion; 311. Insertion protrusion; 32. First cooperating portion; 321. First inserting groove; 33. Second cooperating portion; 331. Second inserting groove; 40. First inserting hole; 50. Second inserting hole.

### Detailed Description of the Embodiments

The technical solutions in the embodiments of the present invention will be clearly and completely described below in combination with the drawings in the embodiments of the present invention. It is apparent that the described embodiments are only part of the embodiments of the present invention, not all the embodiments. The following description of at least one exemplary embodiment is merely illustrative in nature and is never intended to limit the present invention and application or use thereof in any way. Based on the embodiments in the present invention, all other embodiments obtained by those of ordinary skill in the art without creative work shall fall within the protection scope of the present invention.

It is to be noted that, terms used herein are intended to describe specific implementations only and are not intended to limit exemplary embodiments according to the present application. As used herein, unless the context clearly indicates otherwise, a singular form is also intended to include a plural form. In addition, it is further understood that when the terms "including" and/or "comprising" are used in this specification, the terms indicate the presence of features, steps, operations, devices, components, and/or a combination thereof.

Unless specifically stated otherwise, the relative arrangement, numerical expressions, and numerical values of the components and steps set forth in these embodiments do not limit the scope of the present invention. In addition, it is to be understood that the dimension of each portion shown in the drawings is not drawn to actual scale for ease of description. Techniques, methods, and devices known to those of ordinary skill in the relevant art may not be discussed in detail, but where appropriate, such techniques, methods, and devices should be considered as a part of the authorized specification. In all examples shown and discussed herein, any specific value should be construed as illustrative merely and not as limitations. Accordingly, other examples of the exemplary embodiments may have different values. It is to be noted that similar numbers and letters indicate similar items in the following drawings, so once a certain item is defined in one drawing, no further discussions are required for same in the subsequent drawings.

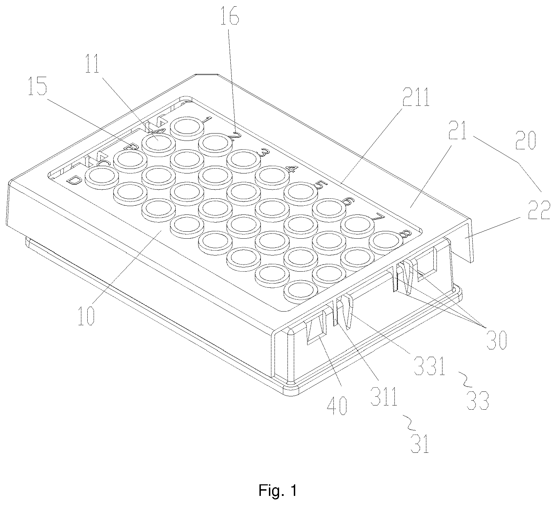

As shown in Fig. 1 to Fig. 3, the amplification plate assembly of this embodiment includes an amplification plate body 10, a frame structure 20, a sealing film, and an insertion structure 30. The amplification plate body 10 is provided with a plurality of accommodating grooves 11; the frame structure 20 covers on the amplification plate body 10 and includes a mounting opening 211, wherein groove openings of the plurality of accommodating grooves 11 are opposite to the mounting opening 211; the sealing film is disposed on the frame structure 20 and seals the mounting opening 211; and the insertion structure 30 is disposed between the frame structure 20 and the amplification plate body 10, where the insertion structure 30 includes an insertion portion 31 and a cooperating portion cooperating with the insertion portion 31; the insertion portion 31 is disposed on the frame structure 20, and the cooperating portion is disposed on the amplification plate body 10; the cooperating portion includes a first cooperating portion and a second cooperating portion 33; when the insertion portion 31 is cooperated with the first cooperating portion in an inserting manner, there is a predetermined distance between the sealing film and the amplification plate body 10; and when the insertion portion 31 is cooperated with the second cooperating portion 33 in an inserting manner, the sealing film is attached to an upper surface of the amplification plate body 10.

Through applying the amplification plate assembly of this embodiment, the amplification plate assembly includes the amplification plate body 10 and the frame structure 20; the frame structure 20 is provided with the mounting opening 211; and the mounting opening 211 is sealed with the sealing film, and the sealing film is disposed opposite to the plurality of accommodating grooves 11. The sealing film can be adhered on the amplification plate body 10 through hot-pressing of a hot-pressing film machine and seals the plurality of accommodating grooves 11, such that detection samples in the accommodating grooves are prevented from overflowing. In addition, the frame structure 20 is further provided with the insertion portion 31, and the amplification plate body 10 is provided with the first cooperating portion and the second cooperating portion 33, which are respectively cooperated with the insertion portion 31. When the amplification plate assembly is transported, the insertion portion 31 may be cooperated with the first cooperating portion in the inserting manner, and in this case, there is a predetermined distance between the sealing film and the amplification plate body 10, such that the sealing film and the amplification plate body 10 are prevented from scratching due to shaking during transportation, thereby effectively reducing the probability of sealing film damage. When the accommodating grooves 11 need to be sealed, the insertion portion 31 may be cooperated with the second cooperating portion 33 in the inserting manner, and in this case, the sealing film is attached to the upper surface of the amplification plate body 10, such that the sealing film may be heated by the hot-pressing film machine, so as to adhere the sealing film on the amplification plate body 10, thereby achieving sealing of the accommodating grooves 11. In the above structure, by cooperating the insertion portion 31 with different cooperating portions, the probability of sealing film damage can be effectively reduced when the amplification plate assembly is transported. In addition, the sealing method between the sealing film and the amplification plate body 10 is convenient and efficient, and sealing may be achieved by the hot-pressing film machine, without additionally disposing other auxiliary devices.

Definitely, in other embodiments that are not shown in the figures, the insertion portion may also be provided on the amplification plate body, and the cooperating portion may also be provided on the frame structure.

As shown in Fig. 1 to Fig. 3, in this embodiment, the insertion portion 31 includes an insertion protrusion 311; and the insertion protrusion 311 is provided on the frame structure 20. The first cooperating portion includes a first inserting groove 321; the second cooperating portion 33 includes a second inserting groove 331; the first inserting groove 321 and the second inserting groove 331 are both disposed on the amplification plate body 10; and a groove bottom wall of the second inserting groove 331 is lower than a groove bottom wall of the first inserting groove 321. In the above structure, when the insertion protrusion 311 is inserted in the first inserting groove 321, there is a predetermined distance between the sealing film and the amplification plate body 10. When the insertion protrusion 311 is inserted in the second inserting groove 331, the sealing film is attached to the upper surface of the amplification plate body 10. In addition, the insertion protrusion 311, the first inserting groove 321 and the second inserting groove 331 are simple in structure and convenient in processing. A connecting method between the insertion protrusion 311 and the first inserting groove 321 and the second inserting groove 331 is convenient, thereby achieving rapid assembling.

As shown in Fig. 1 to Fig. 3, in this embodiment, the first inserting groove 321 and the second inserting groove 331 are arranged at intervals on one side of the amplification plate body 10, such that the frame structure 20 translates to allow the insertion protrusion 311 to switch between the first inserting groove 321 and the second inserting groove 331. Through the above structure, the insertion protrusion 311 can be conveniently switched between the first inserting groove 321 and the second inserting groove 331. Specifically, in this embodiment, the frame structure 20 is grabbed by a grabbing apparatus to switch the insertion protrusion 311 between the first inserting groove 321 and the second inserting groove 331. When the insertion protrusion 311 is moved from the first inserting groove 321 to the second inserting groove 331, the grabbing apparatus moves downward to grab the frame structure 20, then the amplification plate body 10 is horizontally moved, and then the grabbing apparatus puts down the frame structure 20, such that the insertion protrusion 311 may be switched from the first inserting groove 321 to the second inserting groove 331.

As shown in Fig. 1 to Fig. 3, in this embodiment, there are a plurality of insertion protrusions 311; a part of the plurality of insertion protrusions 311 are arranged at intervals at a first end 12 of the frame structure 20; the other part of the plurality of insertion protrusions 311 are arranged at intervals at a second end 13 of the frame structure 20; there are a plurality of first inserting grooves 321, and the plurality of first inserting grooves are in one-to-one correspondence with the plurality of insertion protrusions 311; and there are a plurality of second inserting grooves 331, and the plurality of second inserting grooves are in one-to-one correspondence with the plurality of insertion protrusions 311. In the above structure, part of the plurality of insertion protrusions 311 are arranged at intervals at the first end 12 of the frame structure 20, and similarly, the other part of the plurality of insertion protrusions 311 are arranged at intervals at the second end 13 of the frame structure 20. Through such arrangement, there are a plurality of contact points when the frame structure 20 covering the amplification plate body 10, such that the frame structure 20 can stably cover the amplification plate body 10. Correspondingly, the first inserting groove 321 and the second inserting groove 331 need to be disposed corresponding to the insertion protrusion 311, so as to ensure that the insertion protrusion 311 can be respectively cooperated with the first inserting groove 321 and the second inserting groove 331 in the inserting manner.

As shown in Fig. 1 to Fig. 3, in this embodiment, the first inserting groove 321 is provided on a sidewall of the amplification plate body 10 and penetrates a top wall of the amplification plate body 10; and the second inserting groove 331 is provided on the sidewall of the amplification plate body 10 and penetrates the top wall of the amplification plate body 10. In the above structure, the first inserting groove 321 and the second inserting groove 331 are both provided on the sidewall of the amplification plate body 10 and can penetrate the top wall, such that the insertion protrusion 311 can be inserted in the first inserting groove 321 or the second inserting groove 331 from top to bottom, and the frame structure 20 can be smoothly assembled with the amplification plate body 10. In addition, through the above arrangement, the space on the sidewall of the amplification plate body 10 is effectively used, such that the first inserting groove 321 and the second inserting groove 331 are prevented from occupying an excessive space on the top wall of the amplification plate body 10 of the amplification plate assembly.

As shown in Fig. 1 to Fig. 3, in this embodiment, the frame structure 20 includes a top frame 21 and a side frame 22 disposed in a circumferential direction of the top frame 21; and the side frame 22 is located on a circumferential outer side of the sidewall of the amplification plate body 10. The amplification plate assembly further includes a first inserting hole 40 provided on the sidewall of the amplification plate body 10 and a second inserting hole 50 provided on the side frame 22. When the insertion protrusion 311 is cooperated with the first inserting groove 321 in the inserting manner, the first inserting hole 40 is disposed opposite to the second inserting hole 50; and when the insertion portion 31 is cooperated with the second inserting groove 331 in the inserting manner, the first inserting hole 40 is disposed opposite to the second inserting hole 50. In the above structure, by the grabbing of the grabbing apparatus, the frame structure 20 may move the amplification plate assembly and switch the insertion protrusion 311 between the first inserting groove 321 and the second inserting groove 331. Specifically, when the amplification plate body 10 and the frame structure 20 are separately placed, a clamping jaw of the grabbing apparatus may individually extend into the first inserting hole 40 of the amplification plate body 10, so as to individually grab the amplification plate body 10, and may also individually extend into the second inserting hole 50 of the frame structure 20, so as to individually grab the frame structure 20. In addition, when the frame structure 20 covers the amplification plate body 10, in regardless of the insertion protrusion 311 on the frame structure 20 being cooperated with the first inserting groove 321 or the second inserting groove 331, the clamping jaw of the grabbing apparatus may simultaneously extend into the first inserting hole 40 and the second inserting hole 50, so as to move the entire amplification plate assembly.

It is to be noted that, the area of the first inserting hole 40 is less than the area of the second inserting hole 50. Since the frame structure 20 has two covering states, the second inserting hole 50 is designed with a larger area, such that when the insertion protrusion 311 on the frame structure 20 is cooperated with the first inserting groove 321, an overlapping area between the first inserting hole 40 and the second inserting hole 50 is large enough, and therefore, the clamping jaw can simultaneously extend into the first inserting hole 40 and the second inserting hole 50 when the insertion protrusion 311 is cooperated with the first inserting groove 321, so as to grab the entire amplification plate assembly. Correspondingly, when the insertion protrusion 311 on the frame structure 20 is cooperated with the second inserting groove 331, there is also a large overlapping area between the second inserting hole 50 and the first inserting hole 40, such that the clamping jaw simultaneously extends into the first inserting hole 40 and the second inserting hole 50.

Specifically, as shown in Fig. 1 to Fig. 3, when the insertion portion 31 is cooperated with the first inserting groove 321 in the inserting manner, a projection of the first inserting hole 40 on the side frame 22 is completely located in the second inserting hole 50; and when the insertion portion 31 is cooperated with the second inserting groove 321 in the inserting manner, at least part of the projection of the first inserting hole 40 on the side frame 22 is located in the second inserting hole 50. In the above structure, the first inserting hole 40 has a large enough area for the clamping jaw of the grabbing apparatus to extend into, such that the stability when the grabbing apparatus moves the entire amplification plate assembly can be improved. Preferably, in this embodiment, the projection of the first inserting hole 40 on the side frame 22 is completely located in the second inserting hole 50.

As shown in Fig. 1 to Fig. 3, in this embodiment, the amplification plate body 10 includes a first end 12 and a second end 13, which are arranged opposite to each other in a length direction of the amplification plate body 10. There are a plurality of first inserting holes 40, the sidewall of the first end 12 of the amplification plate body 10 is provided with a part of the plurality of first inserting holes 40, and the sidewall of the second end 13 of the amplification plate body 10 is provided with the other part of the plurality of first inserting holes 40. There are a plurality of first inserting grooves 321, the sidewall of the first end 12 of the amplification plate body 10 is provided with a part of the plurality of first inserting grooves 321, and the sidewall of the second end 13 of the amplification plate body 10 is provided with the other part of the plurality of first inserting grooves 321. There are a plurality of second inserting grooves 331, the sidewall of the first end 12 of the amplification plate body 10 is provided with a part of the plurality of second inserting grooves 331, and the sidewall of the second end 13 of the amplification plate body 10 is provided with the other part of the plurality of second inserting grooves 331. In the above structure, the plurality of first inserting holes 40, the plurality of first inserting grooves 321 and the plurality of second inserting grooves 331 are respectively arranged on the first end 12 and the second end 13 in the length direction of the amplification plate body 10, such that, when the insertion protrusion 311 is switched between the first inserting groove 321 and the second inserting groove 331, the switching of the insertion protrusion 311 between the first inserting groove 321 and the second inserting groove 331 may be realized by only grabbing the frame structure 20 through the clamping jaw and translating the frame structure.

It is further to be noted that, in this embodiment, an upper edge of the second inserting hole 50 is longer than an upper edge of the first inserting hole 40. In addition, in this embodiment, the clamping jaw is formed by a plurality of clamping blocks, and the plurality of clamping blocks may be close to or far away from each other. When the frame structure 20 is grabbed, there is a large distance among the plurality of clamping blocks, so as to ensure that the clamping blocks can only extend into the second inserting holes 50 but does not extend into the first inserting holes 40, thereby achieving the clamping of the frame structure 20. When the entire amplification plate assembly is grabbed, there is a small distance among the plurality of clamping blocks, such that the clamping blocks can simultaneously extend into the first inserting holes 40 and the second inserting holes 50, thereby achieving the clamping of the entire amplification plate assembly.

It is to be noted that, a consumable material for nucleic acid detection further includes a nucleic acid detection extraction plate. The nucleic acid detection extraction plate is a 96-well plate, of which size is greater than the amplification plate assembly, such that the length of the amplification plate assembly may be set to a size equal to the width of the nucleic acid detection extraction plate. The inserting holes into which the clamping jaw of the grabbing apparatus extends is disposed in the length direction of the amplification plate assembly, and an inserting hole of the nucleic acid detection extraction plate is disposed in a width direction of the nucleic acid detection extraction plate, such that the nucleic acid detection extraction plate and the amplification plate assembly are grabbed by the same grabbing apparatus, thereby improving the universality of the amplification plate assembly.

As shown in Fig. 1 to Fig. 3, in this embodiment, the amplification plate body 10 further includes a plurality of connecting rings 14; the plurality of connecting rings 14 are disposed in one-to-one correspondence with the plurality of accommodating grooves 11; each connecting ring 14 is disposed at the groove opening of the accommodating groove 11 and is disposed concentric with the groove opening of the accommodating groove 11; and upper surfaces of the connecting rings 14 form the upper surface of the amplification plate body 10. In the above structure, a hot-pressing film machine can adhere the sealing film on the connecting rings 14 in a hot-pressing manner, and the connecting rings 14 can improve an adhesion effect of the amplification plate body 10 and the sealing film, such that a sealing effect of the sealing film on the accommodating groove 11 is guaranteed.

As shown in Fig. 1 to Fig. 3, in this embodiment, the plurality of accommodating grooves 11 are arranged in an array; a first identifier 15 is disposed at a first accommodating groove 11 of each row, and a second identifier 16 is disposed at a first accommodating groove 11 of each column. In the above structure, the first identifier 15 may be a letter identifier, and the second identifier 16 may be a number identifier, such that an operator may conveniently position any one of the plurality of accommodating grooves 11.

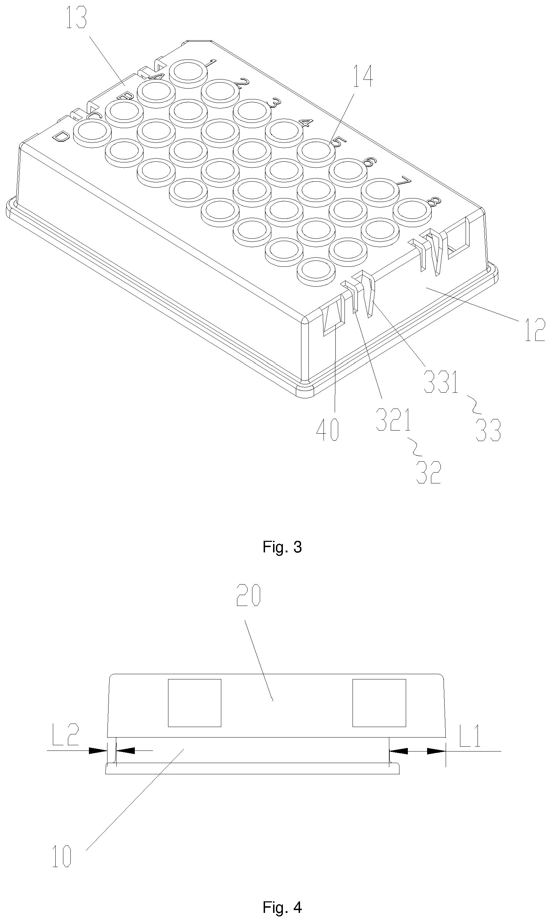

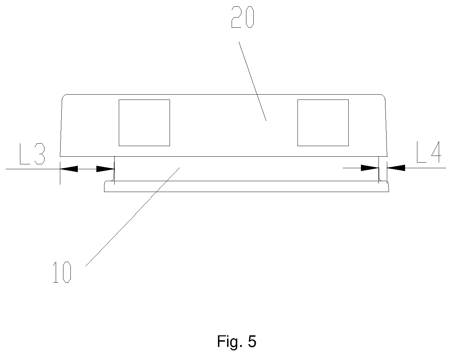

In this embodiment, when observing in a top-down direction, the amplification plate body 10 is a first rectangular structure, and has two long edges (which are a first long edge and a second long edge, respectively) arranged opposite to each other, and two short edges (respectively corresponding to the first end 12 and the second end 13 of the amplification plate body 10 as mentioned above) connected between two ends of the first long edge and two ends of the second long edge; wherein the first end 12 of the amplification plate body 10 is provided with a plurality of first inserting grooves 321 and a plurality of second inserting grooves 331 in one-to-one correspondence with the plurality of first inserting grooves 321. As shown in Fig. 3, the first inserting groove 321 and the second inserting groove 331 arranged adjacent to each other form one group of inserting groove structure, wherein the first inserting groove 321 of the group of inserting groove structure is arranged close to the second long edge, and the second inserting groove 331 of the group of inserting groove structure is arranged close to the first long edge. That is, in Fig. 3, the long edge at the right top position is the first long edge, and the long edge at the left bottom position is the second long edge; and in Figs. 4 and 5, the long edge on the right side is the first long edge, and the long edge on the left side is the second long edge.

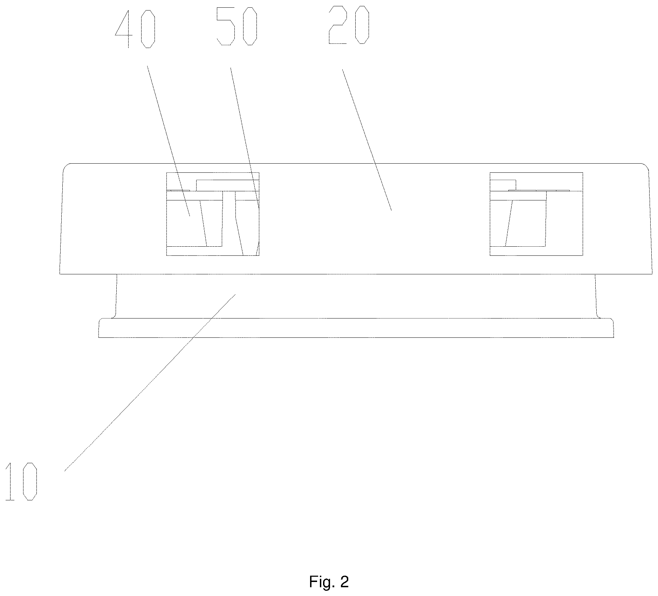

As shown in Figs. 1 and 2, when observing in the top-down direction, the frame structure 20 is a second rectangular structure, and the length of the second rectangular structure is greater than the length of the first rectangular structure, so that the frame structure 20 can cover the amplification plate body 10; and the width of the second rectangular structure is greater than the width of the first rectangular structure and there is a certain spacing between the long edges of the first rectangular structure and second rectangular structure, so that the frame structure 20 can move relative to the amplification plate body 10 in the width direction, such that the insertion portion 31 can be switched between a position at which the insertion portion31 is cooperated with the first cooperating portion 32 and a position at which the insertion portion 31 is cooperated with the second cooperating portion 33. Fig. 4 shows a simplified structural diagram of a lateral direction of the amplification plate assembly when the insertion portion 31 is cooperated with the second cooperating portion 33. A distance L1 of the frame structure 20 protruding from the first long edge of the amplification plate body 10 is greater than a distance L2 of the frame structure 20 protruding from the second long edge of the amplification plate body 10. Fig. 5 shows a simplified structural diagram of a lateral direction of the amplification plate assembly when the insertion portion 31 is cooperated with the first cooperating portion 32. A distance L3 of the frame structure 20 protruding from the second long edge of the amplification plate body 10 is greater than a distance L4 of the frame structure 20 protruding from the first long edge of the amplification plate body 10.

The present invention further provides a method for detecting a state of an amplification plate assembly. The amplification plate assembly is the above amplification plate assembly. The method for detecting the state of the amplification plate assembly includes: moving the amplification plate body 10, so as to cause the amplification plate body 10 to close to a connecting line of a signal transmitter and a signal receiver, and cause the first long edge of the amplification plate body 10 to have a first predetermined distance H1 from the connecting line of the signal transmitter and the signal receiver; and estimating whether the signal receiver receives a signal transmitted by the signal transmitter, if the signal receiver is capable of receiving the signal transmitted by the signal transmitter, estimating that the frame structure does not cover the amplification plate body 10, and if the signal receiver does not receive the signal transmitted by the signal transmitter, estimating that the frame structure covers the amplification plate body 10.

The above solution provides the method for detecting the state of the amplification plate assembly. Specifically, the amplification plate body 10 may be moved to a position close to a signal transmission line of the signal transmitter and the signal receiver, and the first long edge of the amplification plate body 10 has the first predetermined distance H1 from the signal transmission line of the signal transmitter and the signal receiver. Then, estimating whether the signal receiver receives the signal transmitted by the signal transmitter, if the signal receiver is capable of receiving the signal transmitted by the signal transmitter, it indicates that there is no object blocking the signal, such that the frame structure 20 does not cover the amplification plate body 10. If the signal receiver does no receive the signal transmitted by the signal transmitter, it indicates that the signal is blocked by the frame structure 20, such that it may be estimated that the frame structure covers the amplification plate body 10. Through the above solution, a covering state of the amplification plate assembly may be estimated through the signal transmitter and the signal receiver, such that a subsequent film sealing operation may be conveniently performed on the amplification plate assembly.

When the insertion portion 31 is cooperated with the second cooperating portion 33, the distance of the frame structure 20 protruding from the first long edge of the amplification plate body 10 is L1; and when the insertion portion 31 is cooperated with the first cooperating portion 32, the distance of the frame structure 20 protruding from the first long edge of the amplification plate body 10 is L4. As shown in Figs. 4 and 5, L4 is less than L1.

It is to be noted that, the first predetermined distance H1 is less than a distance of the frame structure 20 protruding from the first long edge of the amplification plate body 10. Herein, the distance of the frame structure 20 protruding from the first long edge of the amplification plate body 10 refers to the smaller one of L1 and L4, that is, the distance above refers to L4.

The signal transmission line refers to a transmission path from the signal transmitted by the signal transmitter to the signal received by the signal receiver, and may be a straight connecting line formed between the signal transmitter and the signal receiver in an opposing optocoupler; and the signal transmitter and the signal receiver in a reflective optocoupler may also be located on the same end, and the signal receiver receives the signal by receiving reflected light.

The present invention further provides a method for detecting a state of an amplification plate assembly. The amplification plate assembly is the above amplification plate assembly. The method for detecting the state of the amplification plate assembly includes: moving the amplification plate body 10, so as to cause the first long edge of the amplification plate body 10 to close to a signal transmission line of a signal transmitter and a signal receiver, and cause the first long edge of the amplification plate body 10 to have a second predetermined distance H2 from the signal transmission line of the signal transmitter and the signal receiver; and estimating whether the signal receiver receives a signal transmitted by the signal transmitter, if the signal receiver is capable of receiving the signal transmitted by the signal transmitter, estimating that the frame structure does not cover the amplification plate body 10, and if the signal receiver does not receive the signal transmitted by the signal transmitter, estimating that the insertion portion 31 is cooperated with the second cooperating portion 33 in the inserting manner.

In the above solution, through the signal transmitter and the signal receiver, not only the covering state of the amplification plate assembly can be estimated, but also the specific cooperating portion with which the insertion portion 31 on the frame structure is cooperated can be estimated. Specifically, when the insertion portion 31 is cooperated with the second cooperating portion 33 in the inserting manner, a distance L1 of the frame structure 20 protruding from the first long edge of the amplification plate body 10 is greater than a distance L2 of the frame structure 20 protruding from the second long edge of the amplification plate body 10, such that the second predetermined distance H2 may be set to meet the following condition: L2 < H2 < L1. When the signal transmitted by the transmitter is blocked by the frame structure, it indicates that the insertion portion 31 is cooperated with the second cooperating portion 33 in the inserting manner, that is, the sealing film of the frame structure is attached to the amplification plate body 10.

The present invention further provides a method for detecting a state of an amplification plate assembly. The amplification plate assembly is the above amplification plate assembly. The method for detecting the state of the amplification plate assembly includes: moving the amplification plate body 10, so as to cause the second long edge of the amplification plate body 10 to close to a signal transmission line (which is also a connecting line of a signal transmitter and a signal receiver) of the signal transmitter and the signal receiver, and cause the second long edge of the amplification plate body 10 to have a third predetermined distance H3 from the signal transmission line of the signal transmitter and the signal receiver; and estimating whether the signal receiver receives a signal transmitted by the signal transmitter, if the signal receiver is capable of receiving the signal transmitted by the signal transmitter, estimating that the frame structure does not cover the amplification plate body 10, and if the signal receiver does not receive the signal transmitted by the signal transmitter, estimating that the insertion portion 31 is cooperated with the first cooperating portion 32 in the inserting manner.

In the above solution, through the signal transmitter and the signal receiver, not only the covering state of the amplification plate assembly can be estimated, but also the specific cooperating portion with which the insertion portion 31 on the frame structure is cooperated can be estimated. Specifically, when the insertion portion 31 is cooperated with the first cooperating portion 32 in the inserting manner, a distance L3 of the frame structure 20 protruding from the second long edge of the amplification plate body 10 is greater than a distance L4 of the frame structure 20 protruding from the first long edge of the amplification plate body 10, such that the third predetermined distance H3 may be set to meet the following condition: L4 < H3 < L3. When the signal transmitted by the transmitter is blocked by the frame structure, it indicates that the insertion portion 31 is cooperated with the second cooperating portion 33 in the inserting manner, that is, there is a predetermined distance between the sealing film of the frame structure and the amplification plate body 10.

It is to be noted that, in the above implementation, the signal transmitted by the signal transmitter is a laser signal. The signal transmitter and the signal receiver are both fixedly disposed. Detection cooperation between the amplification plate assembly and the signal transmitter and the signal receiver are achieved by moving the amplification plate assembly. In other implementations, the signal transmitter and the signal receiver may also be movably disposed, and the amplification plate assembly is fixedly placed, such that detection and cooperation are achieved by moving the signal transmitter and the signal receiver.

In the description of the present invention, it is to be understood that, terms such as "front, rear, up, down, left or right", "transverse, longitudinal, vertical, or horizontal", "top or bottom", and the like are usually based on the orientation or positional relationships shown in the drawings and are used only to facilitate and simplify the description of the present invention. In the absence of any indication to the contrary, these orientation words do not indicate and imply that the device or component referred to must have a particular orientation or be constructed and operated in a particular orientation, and therefore cannot be construed as limiting the scope of protection of the present invention. The orientation word "inside or outside" refers to the inside and outside relative to the contours of the components themselves.

For ease of description, spatially relative terms such as "on...", "above...", "on an upper surface of...", "upper", and the like may be used here to describe the spatial position relationship between a device or feature and other devices or features as shown in the figure. It is to be understood that, the spatially relative terms are intended to cover different orientations in use or operation other than the orientation of the device described in the figure. For example, if the devices in the drawings are inverted, the devices described as "above" or "on" other devices or configurations will later be positioned as "below" or "under" other devices or configurations. Therefore, the exemplary term "above..." may include both orientations of "above..." and "below...". The device may also be positioned in other different ways (rotating 90 degrees or in other orientations), and the spatially relative descriptions used here are explained accordingly.

In addition, it is to be noted that, the use of words such as "first" and "second" to limit the parts is only to facilitate the distinguishing of corresponding parts, if not otherwise stated, the above words do not have a special meaning, and therefore cannot be understood as a limitation of the scope of protection of the present invention.

## Claims

1. An amplification plate assembly, comprising:
an amplification plate body (10), provided with a plurality of accommodating grooves (11);
a frame structure (20), covering on the amplification plate body (10) and comprising a mounting opening (211), wherein groove openings of the plurality of accommodating grooves (11) are opposite to the mounting opening (211);
a sealing film, disposed on the frame structure (20) and sealing the mounting opening (211); and
an insertion structure (30), disposed between the frame structure (20) and the amplification plate body (10), wherein the insertion structure (30) comprises an insertion portion (31) and a cooperating portion cooperating with the insertion portion (31); one of the insertion portion (31) and the cooperating portion is disposed on the frame structure (20), and the other one is disposed on the amplification plate body (10); the cooperating portion comprises a first cooperating portion (32) and a second cooperating portion (33); when the insertion portion (31) is cooperated with the first cooperating portion (32) in an inserting manner, there is a predetermined distance between the sealing film and the amplification plate body (10); and when the insertion portion (31) is cooperated with the second cooperating portion (33) in an inserting manner, the sealing film is attached to an upper surface of the amplification plate body (10).
**characterized in that** the first cooperating portion (32) and the second cooperating portion (33) are arranged at intervals on one side of the amplification plate body (10) or the frame structure (20), such that the frame structure (20) translates horizontally to allow the insertion portion (31) to switch between the first cooperating portion (32) and the second cooperating portion (33);
wherein the insertion portion (31) comprises an insertion protrusion (311); the insertion protrusion (311) is provided on the frame structure (20); the first cooperating portion (32) comprises a first inserting groove (321); the second cooperating portion (33) comprises a second inserting groove (331); the first inserting groove (321) and the second inserting groove (331) are both disposed on the amplification plate body (10); and a groove bottom wall of the second inserting groove (331) is lower than a groove bottom wall of the first inserting groove (321).

2. The amplification plate assembly according to claim 1, wherein there are a plurality of insertion protrusions (311); a part of the plurality of insertion protrusions (311) are arranged at intervals at a first end of the frame structure (20); the other part of the plurality of insertion protrusions (311) are arranged at intervals at a second end of the frame structure (20); there are a plurality of first inserting grooves (321), and the plurality of first inserting grooves are in one-to-one correspondence with the plurality of insertion protrusions (311); and there are a plurality of second inserting grooves (331), and the plurality of second inserting grooves are in one-to-one correspondence with the plurality of insertion protrusions (311).

3. The amplification plate assembly according to claim 1, wherein the first inserting groove (321) is provided on a sidewall of the amplification plate body (10) and penetrates a top wall of the amplification plate body (10); and the second inserting groove (331) is provided on the sidewall of the amplification plate body (10) and penetrates the top wall of the amplification plate body (10).

4. The amplification plate assembly according to claim 1, wherein the frame structure (20) comprises a top frame (21) and a side frame (22) disposed in a circumferential direction of the top frame (21); the side frame (22) is located on a circumferential outer side of a sidewall of the amplification plate body (10); the amplification plate assembly further comprises a first inserting hole (40) provided on the sidewall of the amplification plate body (10) and a second inserting hole (50) provided on the side frame (22); when the insertion protrusion (311) is cooperated with the first inserting groove (321) in the inserting manner, the first inserting hole (40) is disposed opposite to the second inserting hole (50); and when the insertion portion (31) is cooperated with the second inserting groove (331) in the inserting manner, the first inserting hole (40) is disposed opposite to the second inserting hole (50).

5. The amplification plate assembly according to claim 4, wherein when the insertion portion (31) is cooperated with the first inserting groove (321) in the inserting manner, a projection of the first inserting hole (40) on the side frame (22) is completely located in the second inserting hole (50); and when the insertion portion (31) is cooperated with the second inserting groove (331) in the inserting manner, at least part of the projection of the first inserting hole (40) on the side frame (22) is located in the second inserting hole (50).

6. The amplification plate assembly according to claim 4, wherein the amplification plate body (10) comprises a first end (12) and a second end (13), which are arranged opposite to each other in a length direction of the amplification plate body (10);
there are a plurality of first inserting holes (40), a sidewall of the first end (12) of the amplification plate body (10) is provided with a part of the plurality of first inserting holes (40), and a sidewall of the second end (13) of the amplification plate body (10) is provided with the other part of the plurality of first inserting holes (40);
there are a plurality of first inserting grooves (321), the sidewall of the first end (12) of the amplification plate body (10) is provided with a part of the plurality of first inserting grooves (321), and the sidewall of the second end (13) of the amplification plate body (10) is provided with the other part of the plurality of first inserting grooves (321); and
there are a plurality of second inserting grooves (331), the sidewall of the first end (12) of the amplification plate body (10) is provided with a part of the plurality of second inserting grooves (331), and the sidewall of the second end (13) of the amplification plate body (10) is provided with the other part of the plurality of second inserting grooves (331).

7. The amplification plate assembly according to any one of claims 1 to 6, wherein the amplification plate body (10) further comprises a plurality of connecting rings (14); the plurality of connecting rings (14) are arranged in one-to-one correspondence with the plurality of accommodating grooves (11); each connecting ring (14) is disposed at the groove opening of the accommodating groove (11) and is disposed concentric with the groove opening of the accommodating groove (11); and upper surfaces of the connecting rings (14) form the upper surface of the amplification plate body (10).

8. The amplification plate assembly according to any one of claims 1 to 6, wherein the plurality of accommodating grooves (11) are arranged in an array; a first identifier (15) is disposed at a first accommodating groove (11) of each row, and a second identifier (16) is disposed at a first accommodating groove (11) of each column.

9. A method for detecting a state of an amplification plate assembly, wherein the amplification plate assembly is the amplification plate assembly according to any one of claims 1 to 8; the amplification plate body (10) of the amplification plate assembly comprises a first long edge, when the insertion portion (31) is cooperated with the second cooperating portion (33) in the inserting manner, a distance of the frame structure (20) protruding from the first long edge is L1, when the insertion portion (31) is cooperated with the first cooperating portion (32) in the inserting manner, a distance of the frame structure (20) protruding from the first long edge is L4, and the method for detecting the state of the amplification plate assembly comprises:
moving the amplification plate body (10) of the amplification plate assembly, so as to cause the amplification plate body (10) to close to a signal transmission line of a signal transmitter and a signal receiver, and cause the first long edge of the amplification plate body (10) to have a first predetermined distance H1 from a connecting line of the signal transmitter and the signal receiver, wherein H1 < L1 and H1 < L4; and
estimating whether the signal receiver receives a signal transmitted by the signal transmitter, if the signal receiver is capable of receiving the signal transmitted by the signal transmitter, estimating that the frame structure (20) does not cover the amplification plate body (10), and if the signal receiver does not receive the signal transmitted by the signal transmitter, estimating that the frame structure (20) covers the amplification plate body (10).

10. A method for detecting a state of an amplification plate assembly, wherein the amplification plate assembly is the amplification plate assembly according to any one of claims 1 to 8; the amplification plate body (10) of the amplification plate assembly comprises a first long edge and a second long edge, when the insertion portion (31) is cooperated with the second cooperating portion (33) in the inserting manner, a distance of the frame structure (20) protruding from the first long edge is L1, and a distance of the frame structure (20) protruding from the second long edge is L2, and the method for detecting the state of the amplification plate assembly comprises:
moving the amplification plate body (10) of the amplification plate assembly, so as to cause the first long edge of the amplification plate body (10) to close to a signal transmission line of a signal transmitter and a signal receiver, and cause the first long edge of the amplification plate body (10) to have a second predetermined distance H2 from the signal transmission line of the signal transmitter and the signal receiver, wherein L2 < H2 < L1; and
estimating whether the signal receiver receives a signal transmitted by the signal transmitter, if the signal receiver is capable of receiving the signal transmitted by the signal transmitter, estimating that the frame structure (20) does not cover the amplification plate body (10), and if the signal receiver does not receive the signal transmitted by the signal transmitter, estimating that the insertion portion (31) is cooperated with the second cooperating portion (33) in the inserting manner.

11. A method for detecting a state of an amplification plate assembly, wherein the amplification plate assembly is the amplification plate assembly according to any one of claims 1 to 8; the amplification plate body (10) of the amplification plate assembly comprises a first long edge and a second long edge, when the insertion portion (31) is cooperated with the first cooperating portion (32) in the inserting manner, a distance of the frame structure (20) protruding from the first long edge is L4, and a distance of the frame structure (20) protruding from the second long edge is L3, and the method for detecting the state of the amplification plate assembly comprises:
moving the amplification plate body (10) of the amplification plate assembly, so as to cause the second long edge of the amplification plate body (10) to close to a signal transmission line of a signal transmitter and a signal receiver, and cause the second long edge of the amplification plate body (10) to have a third predetermined distance H3 from the signal transmission line of the signal transmitter and the signal receiver, wherein L4 < H3 < L3; and
estimating whether the signal receiver receives a signal transmitted by the signal transmitter, if the signal receiver is capable of receiving the signal transmitted by the signal transmitter, estimating that the frame structure (20) does not cover the amplification plate body (10), and if the signal receiver does not receive the signal transmitted by the signal transmitter, estimating that the insertion portion (31) is cooperated with the first cooperating portion (32) in the inserting manner.

## Patentansprüche

1. Verstärkungsplattenbaugruppe, umfassend:
einen Verstärkungsplattenkörper (10), der mit einer Vielzahl von Aufnahmenuten (11) bereitgestellt ist;
eine Rahmenstruktur (20), die den Verstärkungsplattenkörper (10) abdeckt und eine Montageöffnung (211) umfasst, wobei die Nutöffnungen der Vielzahl von Aufnahmenuten (11) der Montageöffnung (211) gegenüberliegen;
eine Dichtungsfolie, die auf der Rahmenstruktur (20) angeordnet ist und die Montageöffnung (211) abdichtet; und
eine Einführstruktur (30), die zwischen der Rahmenstruktur (20) und dem Verstärkungsplattenkörper (10) angeordnet ist, wobei die Einführstruktur (30) einen Einführabschnitt (31) und einen mit dem Einführabschnitt (31) Zusammenwirkungsabschnitt umfasst; entweder der Einführabschnitt (31) oder der Zusammenwirkungsabschnitt an der Rahmenstruktur (20) angeordnet ist, während der jeweils andere an dem Verstärkungsplattenkörper (10) angeordnet ist; der Zusammenwirkungsabschnitt umfasst einen ersten Zusammenwirkungsabschnitt (32) und einen zweiten Zusammenwirkungsabschnitt (33); wenn der Einführabschnitt (31) in Einführstellung mit dem ersten Zusammenwirkungsabschnitt (32) in Eingriff steht, besteht ein vorbestimmter Abstand zwischen der Dichtungsfolie und dem Verstärkungsplattenkörper (10); und wenn der Einführabschnitt (31) in Einführstellung in Eingriff mit dem zweiten Zusammenwirkungsabschnitt (33) gebracht wird, wird die Dichtungsfolie an einer Oberseite des Verstärkungsplattenkörpers (10) befestigt.
**dadurch gekennzeichnet, dass** der erste Zusammenwirkungsabschnitt (32) und der zweite Zusammenwirkungsabschnitt (33) in Abständen auf einer Seite des Verstärkungsplattenkörpers (10) oder der Rahmenstruktur (20) in Abständen angeordnet sind, sodass sich die Rahmenstruktur (20) horizontal verschiebt, um dem Einführabschnitt (31) den Wechsel zwischen dem ersten Zusammenwirkungsabschnitt (32) und dem zweiten Zusammenwirkungsabschnitt (33) zu ermöglichen;
wobei der Einführabschnitt (31) einen Einführvorsprung (311) umfasst; der Einführvorsprung (311) an der Rahmenstruktur (20) bereitgestellt ist; der erste Zusammenwirkungsabschnitt (32) eine erste Einführnut (321) umfasst; der zweite Zusammenwirkungsabschnitt (33) eine zweite Einführnut (331) umfasst; die erste Einführnut (321) und die zweite Einführnut (331) beide am Verstärkungsplattenkörper (10) angeordnet sind; und eine Nutbodenwand der zweiten Einführnut (331) tiefer liegt als eine Nutbodenwand der ersten Einführnut (321).

2. Verstärkungsplattenbaugruppe nach Anspruch 1, wobei eine Vielzahl von Einführvorsprüngen (311) vorhanden ist; ein Teil der Vielzahl von Einführvorsprüngen (311) in Abständen an einem ersten Ende der Rahmenstruktur (20) angeordnet ist; der andere Teil der Vielzahl von Einführvorsprüngen (311) in Abständen an einem zweiten Ende der Rahmenstruktur (20) angeordnet ist; es gibt eine Vielzahl von ersten Einführnuten (321), und die Vielzahl der ersten Einführnuten in einer Eins-zu-Eins-Entsprechung zu der Vielzahl der Einführvorsprünge (311) steht; und es eine Vielzahl von zweiten Einführnuten (331) gibt, und die Vielzahl der zweiten Einführnuten in einer Eins-zu-Eins-Entsprechung mit der Vielzahl der Einführvorsprünge (311) steht.

3. Verstärkungsplattenbaugruppe nach Anspruch 1, wobei die erste Einführnut (321) an einer Seitenwand des Verstärkungsplattenkörpers (10) vorgesehen ist und eine obere Wand des Verstärkungsplattenkörpers (10) durchdringt; und die zweite Einführnut (331) an der Seitenwand des Verstärkungsplattenkörpers (10) bereitgestellt ist und die obere Wand des Verstärkungsplattenkörpers (10) durchdringt.

4. Verstärkungsplattenbaugruppe nach Anspruch 1, wobei die Rahmenstruktur (20) einen oberen Rahmen (21) und einen Seitenrahmen (22) umfasst, der in Umfangsrichtung des oberen Rahmens (21) angeordnet ist; der Seitenrahmen (22) an einer äußeren Umfangsseite einer Seitenwand des Verstärkungsplattenkörpers (10) angeordnet ist; die Verstärkungsplattenbaugruppe ferner eine erste Einführöffnung (40), die an der Seitenwand des Verstärkungsplattenkörpers (10) bereitgestellt ist, und eine zweite Einführöffnung (50), die am Seitenrahmen (22) bereitgestellt ist, umfasst; wenn der Einführvorsprung (311) in Einführstellung mit der ersten Einführnut (321) in Eingriff steht, ist die erste Einführöffnung (40) der zweiten Einführöffnung (50) gegenüberliegend angeordnet; und wenn der Einführabschnitt (31) in Einführstellung mit der zweiten Einführnut (331) in Eingriff steht, ist die erste Einführöffnung (40) der zweiten Einführöffnung (50) gegenüberliegend angeordnet.

5. Verstärkungsplattenbaugruppe nach Anspruch 4, wobei, wenn der Einführabschnitt (31) in Einführstellung mit der ersten Einführnut (321) in Eingriff steht, eine Projektion der ersten Einführöffnung (40) auf dem Seitenrahmen (22) vollständig in der zweiten Einführöffnung (50) liegt; und wenn der Einführabschnitt (31) in Einführstellung mit der zweiten Einführnut (331) in Eingriff steht, befindet sich mindestens ein Teil der Projektion der ersten Einführöffnung (40) auf dem Seitenrahmen (22) in der zweiten Einführöffnung (50).

6. Verstärkungsplattenbaugruppe nach Anspruch 4, wobei der Verstärkungsplattenkörper (10) ein erstes Ende (12) und ein zweites Ende (13) aufweist, die einander in einer Längsrichtung des Verstärkungsplattenkörpers (10) gegenüberliegend angeordnet sind;
es eine Vielzahl von ersten Einführöffnungen (40) gibt, eine Seitenwand des ersten Endes (12) des Verstärkungsplattenkörpers (10) mit einem Teil der mehreren ersten Einführöffnungen (40) bereitgestellt ist und eine Seitenwand des zweiten Endes (13) des Verstärkungsplattenkörpers (10) mit dem anderen Teil der Vielzahl von ersten Einführöffnungen (40) bereitgestellt ist;
es eine Vielzahl von ersten Einführnuten (321) gibt, die Seitenwand des ersten Endes (12) des Verstärkungsplattenkörpers (10) mit einem Teil der Vielzahl von ersten Einführnuten (321) bereitgestellt ist, und die Seitenwand des zweiten Endes (13) des Verstärkungsplattenkörpers (10) mit dem anderen Teil der mehreren ersten Einführnuten (321) bereitgestellt ist; und
es eine Vielzahl von zweiten Einführnuten (331) gibt, wobei die Seitenwand des ersten Endes (12) des Verstärkungsplattenkörpers (10) mit einem Teil der Vielzahl von zweiten Einführnuten (331) bereitgestellt ist und die Seitenwand des zweiten Endes (13) des Verstärkungsplattenkörpers (10) mit dem anderen Teil der Vielzahl von zweiten Einführnuten (331) bereitgestellt ist.

7. Verstärkungsplattenbaugruppe nach einem der Ansprüche 1 bis 6, wobei der Verstärkungsplattenkörper (10) ferner eine Vielzahl von Verbindungsringen (14) umfasst; die Vielzahl von Verbindungsringen (14) in einer Eins-zu-Eins-Entsprechung zu der Vielzahl von Aufnahmenuten (11) angeordnet ist; jeder Verbindungsring (14) an der Nutöffnung der Aufnahmenut (11) angeordnet ist und konzentrisch zur Nutöffnung der Aufnahmenut (11) angeordnet ist; und die Oberseiten der Verbindungsringe (14) die Oberseite des Verstärkungsplattenkörpers (10) bilden.

8. Verstärkungsplattenbaugruppe nach einem der Ansprüche 1 bis 6, wobei die Vielzahl von Aufnahmenuten (11) in einer Anordnung angeordnet sind; ein erstes Identifikationsmerkmal (15) an einer ersten Aufnahmenut (11) jeder Zeile angeordnet ist und ein zweites Identifikationsmerkmal (16) an einer ersten Aufnahmenut (11) jeder Spalte angeordnet ist.

9. Verfahren zum Erfassen eines Zustands einer Verstärkungsplattenbaugruppe, wobei die Verstärkungsplattenbaugruppe die Verstärkungsplattenbaugruppe nach einem der Ansprüche 1 bis 8 ist; der Verstärkungsplattenkörper (10) der Verstärkungsplattenbaugruppe eine erste Längskante aufweist, wobei, wenn der Einführabschnitt (31) mit dem zweiten Zusammenwirkungsabschnitt (33) in der Einführstellung in Eingriff steht, ein Abstand der Rahmenstruktur (20), die aus der ersten Längskante herausragt, L1 beträgt; wenn der Einführabschnitt (31) in der Einführstellung mit dem ersten Zusammenwirkungsabschnitt (32) in Eingriff steht, der Abstand der aus der ersten Längskante herausragenden Rahmenstruktur (20) L4 beträgt; und das Verfahren zum Erfassen des Zustands der Verstärkungsplattenbaugruppe umfasst:
Bewegen des Verstärkungsplattenkörpers (10) der Verstärkungsplattenbaugruppe, um zu bewirken, dass sich der Verstärkungsplattenkörper (10) einer Signalübertragungsleitung eines Signalsender und eines Signalempfängers annähert, und zu bewirken, dass die erste Längskante des Verstärkungsplattenkörpers (10) einen ersten vorgegebenen Abstand H1 zu einer Verbindungsleitung zwischen dem Signalsender und dem Signalempfänger aufweist, wobei H1 < L1 und H1 < L4 gilt; und
Schätzen, ob der Signalempfänger ein vom Signalsender gesendetes Signal empfängt; falls der Signalempfänger in der Lage ist, das vom Signalsender gesendete Signal zu empfangen, wird geschätzt, dass die Rahmenstruktur (20) den Verstärkungsplattenkörper (10) nicht abdeckt, und falls der Signalempfänger das vom Signalsender gesendete Signal nicht empfängt, Schätzen, dass die Rahmenstruktur (20) den Verstärkungsplattenkörper (10) abdeckt.

10. Verfahren zum Erfassen eines Zustands einer Verstärkungsplattenbaugruppe, wobei die Verstärkungsplattenbaugruppe die Verstärkungsplattenbaugruppe nach einem der Ansprüche 1 bis 8 ist; der Verstärkungsplattenkörper (10) der Verstärkungsplattenbaugruppe eine erste Längskante und eine zweite Längskante umfasst, wobei, wenn der Einführabschnitt (31) mit dem zweiten Zusammenwirkungsabschnitt (33) in Einführstellung in Eingriff steht, ein Abstand der Rahmenstruktur (20), die aus der ersten Längskante herausragt, L1 beträgt und der Abstand der aus der zweiten Längskante herausragenden Rahmenstruktur (20) L2 beträgt, und das Verfahren zum Erfassen des Zustands der Verstärkungsplattenbaugruppe umfasst:
Bewegen des Verstärkungsplattenkörpers (10) der Verstärkungsplattenbaugruppe, um zu bewirken, dass sich die erste Längskante des Verstärkungsplattenkörpers (10) einer Signalübertragungsleitung eines Signalsender und eines Signalempfängers annähert, und zu bewirken, dass die erste Längskante des Verstärkungsplattenkörpers (10) einen zweiten vorgegebenen Abstand H2 zur Signalübertragungsleitung des Signalsender und des Signalempfängers aufweist, wobei L2 < H2 < L1 gilt; und
Schätzen, ob der Signalempfänger ein vom Signalsender gesendetes Signal empfängt; falls der Signalempfänger in der Lage ist, das vom Signalsender gesendete Signal zu empfangen, Schätzen, dass die Rahmenstruktur (20) den Verstärkungsplattenkörper (10) nicht abdeckt, und falls der Signalempfänger das vom Signalsender gesendete Signal nicht empfängt, Schätzen, dass der Einführabschnitt (31) mit dem zweiten Zusammenwirkungsabschnitt (33) in Einführstellung in Eingriff steht.

11. Verfahren zum Erfassen eines Zustands einer Verstärkungsplattenbaugruppe, wobei die Verstärkungsplattenbaugruppe die Verstärkungsplattenbaugruppe nach einem der Ansprüche 1 bis 8 ist; der Verstärkungsplattenkörper (10) der Verstärkungsplattenbaugruppe eine erste Längskante und eine zweite Längskante umfasst, wobei, wenn der Einführabschnitt (31) mit dem ersten Zusammenwirkungsabschnitt (32) in Einführstellung in Eingriff steht, ein Abstand der Rahmenstruktur (20), die aus der ersten Längskante herausragt, L4 beträgt und der Abstand der aus der zweiten Längskante herausragenden Rahmenstruktur (20) L3 beträgt, und das Verfahren zum Erfassen des Zustands der Verstärkungsplattenbaugruppe umfasst:
Bewegen des Verstärkungsplattenkörpers (10) der Verstärkungsplattenbaugruppe, um zu bewirken, dass sich die zweite Längskante des Verstärkungsplattenkörpers (10) einer Signalübertragungsleitung eines Signalsenders und eines Signalempfängers annähert, und zu bewirken, dass die zweite Längskante des Verstärkungsplattenkörpers (10) einen dritten vorgegebenen Abstand H3 zur Signalübertragungsleitung des Signalsenders und des Signalempfängers aufweist, wobei L4 < H3 < L3 gilt; und
Schätzen, ob der Signalempfänger ein vom Signalsender gesendetes Signal empfängt; falls der Signalempfänger in der Lage ist, das vom Signalsender gesendete Signal zu empfangen, Schätzen, dass die Rahmenstruktur (20) den Verstärkungsplattenkörper (10) nicht abdeckt, und falls der Signalempfänger das vom Signalsender gesendete Signal nicht empfängt, Schätzen, dass der Einführabschnitt (31) mit dem ersten Zusammenwirkungsabschnitt (32) in Einführstellung in Eingriff steht.

## Revendications

1. Ensemble de plaque d'amplification, comprenant :
un corps de plaque d'amplification (10), muni d'une pluralité de rainures de logement (11) ;
une structure de châssis (20), recouvrant le corps de plaque d'amplification (10) et comprenant une ouverture de montage (211), dans lequel des ouvertures de rainure de la pluralité de rainures de logement (11) sont situées en face de l'ouverture de montage (211) ;
un film d'étanchéité, disposé sur la structure de châssis (20) et scellant l'ouverture de montage (211) ; et
une structure d'insertion (30), disposée entre la structure de châssis (20) et le corps de plaque d'amplification (10), dans lequel la structure d'insertion (30) comprend une partie d'insertion (31) et une partie de coopération coopérant avec la partie d'insertion (31) ; l'une parmi la partie d'insertion (31) et la partie de coopération est disposée sur la structure de châssis (20), et l'autre est disposée sur le corps de plaque d'amplification (10) ; la partie de coopération comprend une première partie de coopération (32) et une deuxième partie de coopération (33) ; lorsque la partie d'insertion (31) coopère avec la première partie de coopération (32) de manière par insertion, il existe une distance prédéterminée entre le film d'étanchéité et le corps de plaque d'amplification (10) ; et lorsque la partie d'insertion (31) coopère avec la deuxième partie de coopération (33) de manière par insertion, le film d'étanchéité est fixé à une surface supérieure du corps de plaque d'amplification (10).
**caractérisé en ce que** la première partie de coopération (32) et la deuxième partie de coopération (33) sont disposées à des intervalles sur un côté du corps de plaque d'amplification (10) ou de la structure de châssis (20), de telle sorte que la structure de châssis (20) se déplace horizontalement pour permettre à la partie d'insertion (31) de basculer entre la première partie de coopération (32) et la deuxième partie de coopération (33) ;
dans lequel la partie d'insertion (31) comprend une saillie d'insertion (311) ; la saillie d'insertion (311) est prévue sur la structure de châssis (20) ; la première partie de coopération (32) comprend une première rainure d'insertion (321) ; la deuxième partie de coopération (33) comprend une deuxième rainure d'insertion (331) ; la première rainure d'insertion (321) et la deuxième rainure d'insertion (331) sont toutes deux disposées sur le corps de la plaque d'amplification (10) ; et une paroi inférieure de la deuxième rainure d'insertion (331) est plus basse qu'une paroi inférieure de rainure de la première rainure d'insertion (321).

2. Ensemble de plaque d'amplification selon la revendication 1, dans lequel il existe une pluralité de saillies d'insertion (311) ; une partie de la pluralité de saillies d'insertion (311) est disposée à des intervalles à une première extrémité de la structure de châssis (20) ; l'autre partie de la pluralité de saillies d'insertion (311) est disposée à des intervalles à une deuxième extrémité de la structure de châssis (20) ; il existe une pluralité de premières rainures d'insertion (321), et la pluralité de premières rainures d'insertion est en correspondance biunivoque avec la pluralité de saillies d'insertion (311) ; et il existe une pluralité de deuxièmes rainures d'insertion (331), et la pluralité de deuxièmes rainures d'insertion est en correspondance biunivoque avec la pluralité de saillies d'insertion (311).

3. Ensemble de plaque d'amplification selon la revendication 1, dans lequel la première rainure d'insertion (321) est prévue sur une paroi latérale du corps de plaque d'amplification (10) et traverse une paroi supérieure du corps de plaque d'amplification (10) ; et la deuxième rainure d'insertion (331) est prévue sur la paroi latérale du corps de plaque d'amplification (10) et traverse la paroi supérieure du corps de plaque d'amplification (10).

4. Ensemble de plaque d'amplification selon la revendication 1, dans lequel la structure de châssis (20) comprend un châssis supérieur (21) et un châssis latéral (22) disposé dans une direction circonférentielle du châssis supérieur (21) ; le châssis latéral (22) est situé sur un côté extérieur circonférentiel d'une paroi latérale du corps de plaque d'amplification (10) ; l'ensemble de plaque d'amplification comprend en outre un premier trou d'insertion (40) prévu sur la paroi latérale du corps de plaque d'amplification (10) et un deuxième trou d'insertion (50) prévu sur le châssis latéral (22) ; lorsque la saillie d'insertion (311) coopère avec la première rainure d'insertion (321) de manière par insertion, le premier trou d'insertion (40) est disposé opposé au deuxième trou d'insertion (50) ; et lorsque la partie d'insertion (31) coopère avec la deuxième rainure d'insertion (331) de manière par insertion, le premier trou d'insertion (40) est disposé opposé au deuxième trou d'insertion (50).

5. Ensemble de plaque d'amplification selon la revendication 4, dans lequel, lorsque la partie d'insertion (31) coopère avec la première rainure d'insertion (321) de manière par insertion, une projection du premier trou d'insertion (40) sur le châssis latéral (22) est située entièrement dans le deuxième trou d'insertion (50) ; et lorsque la partie d'insertion (31) coopère avec la deuxième rainure d'insertion (331) de manière par insertion, au moins une partie de la projection du premier trou d'insertion (40) sur le châssis latéral (22) est située dans le deuxième trou d'insertion (50).

6. Ensemble de plaque d'amplification selon la revendication 4, dans lequel le corps de plaque d'amplification (10) comprend une première extrémité (12) et une deuxième extrémité (13), qui sont disposées à l'opposé l'une de l'autre dans une direction de longueur du corps de plaque d'amplification (10) ;
il existe une pluralité de premiers trous d'insertion (40), une paroi latérale de la première extrémité (12) du corps de plaque d'amplification (10) est pourvue d'une partie de la pluralité de premiers trous d'insertion (40), et une paroi latérale de la deuxième extrémité (13) du corps de plaque d'amplification (10) est pourvue de l'autre partie de la pluralité de premiers trous d'insertion (40) ;
il existe une pluralité de premières rainures d'insertion (321), la paroi latérale de la première extrémité (12) du corps de plaque d'amplification (10) est pourvue d'une partie de la pluralité de premières rainures d'insertion (321), et la paroi latérale de la deuxième extrémité (13) du corps de plaque d'amplification (10) est pourvue de l'autre partie de la pluralité de premières rainures d'insertion (321) ; et
il existe une pluralité de deuxièmes rainures d'insertion (331), la paroi latérale de la première extrémité (12) du corps de plaque d'amplification (10) est pourvue d'une partie de la pluralité de deuxièmes rainures d'insertion (331), et la paroi latérale de la deuxième extrémité (13) du corps de plaque d'amplification (10) est pourvue de l'autre partie de la pluralité de deuxièmes rainures d'insertion (331).

7. Ensemble de plaque d'amplification selon l'une quelconque des revendications 1 à 6, dans lequel le corps de plaque d'amplification (10) comprend en outre une pluralité d'anneaux de connexion (14) ; la pluralité d'anneaux de connexion (14) est agencée en correspondance biunivoque avec la pluralité de rainures de logement (11) ; chaque anneau de connexion (14) est disposé au niveau de l'ouverture de rainure de la rainure de logement (11) et est disposé de manière concentrique par rapport à l'ouverture de rainure de la rainure de logement (11) ; et des surfaces supérieures des anneaux de connexion (14) forment la surface supérieure du corps de plaque d'amplification (10).

8. Ensemble de plaque d'amplification selon l'une quelconque des revendications 1 à 6, dans lequel la pluralité de rainures de logement (11) est disposée dans un réseau ; un premier identificateur (15) est disposé au niveau d'une première rainure de logement (11) de chaque ligne, et un deuxième identificateur (16) est disposé au niveau d'une première rainure de logement (11) de chaque colonne.

9. Procédé de détection d'un état d'un ensemble de plaque d'amplification, dans lequel l'ensemble de plaque d'amplification est l'ensemble de plaque d'amplification selon l'une quelconque des revendications 1 à 8 ; le corps de plaque d'amplification (10) de l'ensemble de plaque d'amplification comprend un premier bord long, lorsque la partie d'insertion (31) coopère avec la deuxième partie de coopération (33) de manière par insertion, une distance de la structure de châssis (20) dépassant du premier bord long est L1, lorsque la partie d'insertion (31) coopère avec la première partie de coopération (32) de manière par insertion, une distance de la structure de châssis (20) dépassant du premier bord long est L4, et le procédé de détection de l'état de l'ensemble de plaque d'amplification comprend :
le déplacement du corps de plaque d'amplification (10) de l'ensemble de plaque d'amplification, de manière à amener le corps de plaque d'amplification (10) à proximité d'une ligne de transmission de signal d'un émetteur de signal et d'un récepteur de signal, et amener le premier bord long du corps de plaque d'amplification (10) à se trouver à une première distance prédéterminée H1 d'une ligne de connexion entre l'émetteur de signal et le récepteur de signal, où H1 < L1 et H1 < L4 ; et
l'estimation si le récepteur de signal reçoit un signal transmis par l'émetteur de signal, si le récepteur de signal est capable de recevoir le signal transmis par l'émetteur de signal, l'estimation que la structure de châssis (20) ne recouvre pas le corps de plaque d'amplification (10), et si le récepteur de signal ne reçoit pas le signal transmis par l'émetteur de signal, l'estimation que la structure de châssis (20) recouvre le corps de plaque d'amplification (10).

10. Procédé de détection d'un état d'un ensemble de plaque d'amplification, dans lequel l'ensemble de plaque d'amplification est l'ensemble de plaque d'amplification selon l'une quelconque des revendications 1 à 8 ; le corps de plaque d'amplification (10) de l'ensemble de plaque d'amplification comprend un premier bord long et un deuxième bord long, lorsque la partie d'insertion (31) coopère avec la deuxième partie de coopération (33) de manière par insertion, une distance de la structure de châssis (20) dépassant du premier bord long est L1, et une distance de la structure de châssis (20) dépassant du deuxième bord long est L2, et le procédé de détection de l'état de l'ensemble de plaque d'amplification comprend :
le déplacement du corps de plaque d'amplification (10) de l'ensemble de plaque d'amplification, de manière à amener le premier bord long du corps de plaque d'amplification (10) à proximité d'une ligne de transmission de signal d'un émetteur de signal et d'un récepteur de signal, et amener le premier bord long du corps de plaque d'amplification (10) à se trouver à une deuxième distance prédéterminée H2 de la ligne de transmission de signal de l'émetteur de signal et du récepteur de signal, où L2 < H2 < L1 ; et
l'estimation si le récepteur de signal reçoit un signal transmis par l'émetteur de signal, si le récepteur de signal est capable de recevoir le signal transmis par l'émetteur de signal, l'estimation que la structure de châssis (20) ne recouvre pas le corps de plaque d'amplification (10), et si le récepteur de signal ne reçoit pas le signal transmis par l'émetteur de signal, l'estimation que la partie d'insertion (31) coopère avec la deuxième partie de coopération (33) de manière par insertion.

11. Procédé de détection d'un état d'un ensemble de plaque d'amplification, dans lequel l'ensemble de plaque d'amplification est l'ensemble de plaque d'amplification selon l'une quelconque des revendications 1 à 8 ; le corps de plaque d'amplification (10) de l'ensemble de plaque d'amplification comprend un premier bord long et un deuxième bord long, lorsque la partie d'insertion (31) coopère avec la première partie de coopération (32) de manière par insertion, une distance de la structure de châssis (20) faisant saillie à partir du premier bord long est L4, et une distance de la structure de châssis (20) faisant saillie à partir du deuxième bord long est L3, et le procédé de détection de l'état de l'ensemble de plaque d'amplification comprend :
le déplacement du corps de plaque d'amplification (10) de l'ensemble de plaque d'amplification, de manière à amener le deuxième bord long du corps de plaque d'amplification (10) à proximité d'une ligne de transmission de signal d'un émetteur de signal et d'un récepteur de signal, et amener le deuxième bord long du corps de plaque d'amplification (10) à se trouver à une troisième distance prédéterminée H3 de la ligne de transmission de signal de l'émetteur de signal et du récepteur de signal, où L4 < H3 < L3 ; et
l'estimation si le récepteur de signal reçoit un signal transmis par l'émetteur de signal ; si le récepteur de signal est capable de recevoir le signal transmis par l'émetteur de signal, l'estimation que la structure de châssis (20) ne recouvre pas le corps de plaque d'amplification (10), et si le récepteur de signal ne reçoit pas le signal transmis par l'émetteur de signal, l'estimation que la partie d'insertion (31) coopère avec la première partie de coopération (32) de manière par insertion.
